# EUROPEAN PATENT APPLICATION

(11) **EP 2 827 299 A2**
(43) Date of publication of application: **21.01.2015**
(21) Application number: 14176999.2
(22) Date of filing: 15.07.2014
(51) Int. Cl.: G06T 11/60

(54) **Electronic device and image data displaying method**

(30) Priority: 17.07.2013 JP 2013148204
(71) Applicant: Ricoh Company, Ltd., Tokyo 143-8555 (JP)
(72) Inventor: Horie, Nobuhiro, Tokyo, 143-8555 (JP)
(74) Representative: Schwabe - Sandmair - Marx

(57) **Abstract**

Provided are an electronic device (1) and an image data displaying method, Each of the electronic device (1) and the image data displaying method displays screen data on a display (10), stores (S505) a plurality of pages of image data in a storage unit (131) in association with page information of the image data, extracts (S807) a part of the image data to store the extracted part of the image data in the storage unit (131), stores (S808) the extracted part of the image data in the storage unit (131), in association with attribute information of the extracted part of the image data and page information of the image data from which the part of the image data has been extracted, and pastes (S907, S908) the extracted part of the image data obtained from the storage unit (131) on the screen data displayed on the display (10).

## Description

### BACKGROUND

### Technical Field

Example embodiments of the present invention generally relate to an electronic device and an image data displaying method.

### Background Art

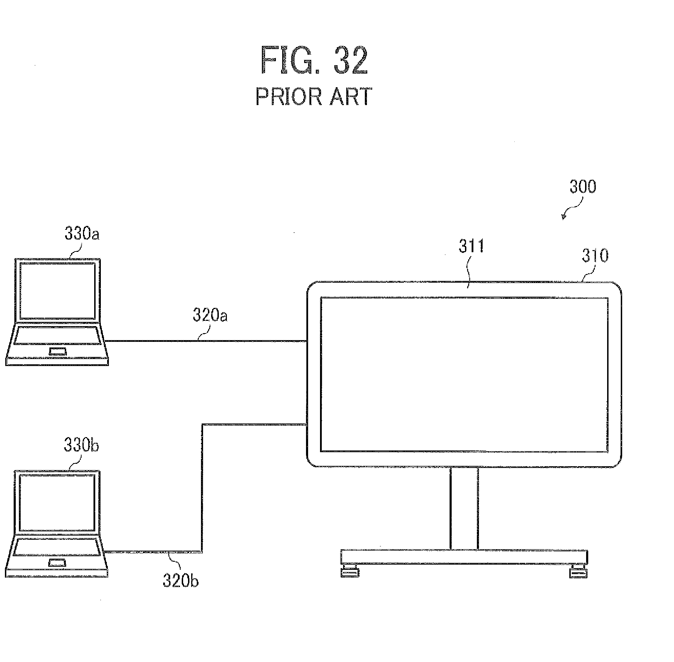

A so-called "electronic information board" having a touch panel on a projector display or a flat-panel display such as a liquid crystal display (LCD) or a plasma display is available on the market. FIG. 32 shows an example of the external appearance of an electronic information board. By using an electronic information board, the screen of a personal computer (PC) can be projected in a greater scale. For this purpose, an electronic information board is used, for example, in an educational institution or in a presentation held in a meeting.

It has become possible to touch the screen directly to manipulate a PC through a touch panel provided for an electronic information board, instead of using a mouse. Moreover, electronic whiteboard application software that operates on a PC is provided for electronic information boards.

The electronic whiteboard application software usually includes touch panel hand-drawing functions such as the function of drawing characters or figures on a screen that serves as a blackboard through a touch panel, and the function of drawing characters or figures over the image read from a PC.

By using such an electronic information board, for example, in a meeting, directly-indicating remarks can be drawn on the screen while the displayed-explanatory materials are being manipulated. Moreover, the image of the screen on which remarks or other figures have been drawn can be recorded as necessary. Accordingly, it becomes possible to review and conclude the meeting efficiently by referring to the screen.

Japanese Patent Application Publication JP-2013-039701-A discloses an electronic information board including a screen area extraction unit that enables a user to select a screen area to be extracted from the screen of a display through a locater, a screen clip storage unit that stores the image data of the screen area to be extracted as a screen clip, a screen clip browsing unit that displays the stored screen clips so as to be selected, and enables an user to select a screen clip to be pasted from the stored screen clips, and a screen clip pasting unit that pastes the selected screen clip on the screen of the display.

Electronic information boards as disclosed in Japanese Patent Application Publication JP-2013-039701-A are provided with the function of displaying a list of the stored images with thumbnails or the like, or the function of browsing or editing the stored image of the entire screen. However, such electronic information boards are not provided with a special function to review the stored image of the screen. For this reason, such electronic information boards are not convenient to review and conclude what has been discussed in a meeting.

Moreover, electronic information boards that are capable of extracting and pasting a part of the screen are known. However, the steps to instruct extraction and pasting are complicated in such electronic information boards, and it takes time to review the image of the screen.

The present invention has been made in view of such circumstances, and aims at providing an electronic device that enables an easy and efficient review of the recorded electronic data and enables an user to efficiently review and conclude what has been discussed in a meeting.

### SUMMARY

Embodiments of the present invention described herein provide an electronic device and an image data displaying method. Each of the electronic device and the image data displaying method displays screen data on a display, stores a plurality of pages of image data in a storage unit in association with page information of the image data, extracts a part of the image data to store the extracted part of the image data in the storage unit, stores the extracted part of the image data in the storage unit, in association with attribute information of the extracted part of the image data and page information of the image data from which the part of the image data has been extracted, and pastes the extracted part of the image data obtained from the storage unit on the screen data displayed on the display.

According to the present invention, an easy and efficient review of the recorded electronic data is provided and a user can efficiently review and conclude what has been discussed in a meeting.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a schematic diagram illustrating the schematic configuration of an electronic information board according to an example embodiment of the present invention.
FIG. 2 is a functional block diagram of an electronic information board according to an example embodiment of the present invention.
FIG. 3 is a flowchart of electronic whiteboard starting processes according to an example embodiment of the present invention.
FIG. 4 is a schematic diagram of an electronic whiteboard starting screen according to an example embodiment of the present invention.
FIG. 5 is a flowchart of on-page content resuming processes according to an example embodiment of the present invention.
FIG. 6 shows an example of the screen where an error has occurred in a passcode entering process, according to an example embodiment of the present invention.
FIG. 7 is a flowchart of passcode entering processes according to an example embodiment of the present invention.
FIG. 8 shows an example of the screen for entering a passcode, according to an example embodiment of the present invention.
FIGs. 9A and 9B is a flowchart of electronic whiteboard utilization processes according to an example embodiment of the present invention.
FIG. 10 shows example 1 of an electronic whiteboard application screen according to an example embodiment of the present invention.
FIG. 11 shows example 2 of an electronic whiteboard application screen according to an example embodiment of the present invention.
FIG. 12 is a flowchart of page insertion processes according to an example embodiment of the present invention.
FIG. 13 is a flowchart of moving-to-next-page processes according to an example embodiment of the present invention.
FIG. 14 is a flowchart of moving-to-previous-page processes according to an example embodiment of the present invention.
FIG. 15 is a flowchart of electronic whiteboard terminating processes according to an example embodiment of the present invention.
FIG. 16 is a flowchart of on-page content storing processes according to an example embodiment of the present invention.
FIG. 17 shows an example of a storage confirmation screen, according to an example embodiment of the present invention.
FIG. 18 is a flowchart of passcode setting processes according to an example embodiment of the present invention.
FIG. 19 shows an example of a passcode setting screen according to an example embodiment of the present invention.
FIG. 20 is a flowchart of passcode-plus-date setting processes according to an example embodiment of the present invention.
FIG. 21 shows an example of a passcode-plus-date setting screen according to an example embodiment of the present invention.
FIG. 22 is a flowchart of page clip extraction processes according to an example embodiment of the present invention.
FIG. 23 shows an example of the initial screen where page clip extraction processes are to be performed, according to an example embodiment of the present invention.
FIG. 24 shows an example of the screen where page clip extraction processes are performed, according to an example embodiment of the present invention.
FIG. 25 is a flowchart of page-clip pasting processes according to an example embodiment of the present invention.
FIG. 26 shows an example of the initial screen where page-clip pasting processes are to be performed, according to an example embodiment of the present invention.
FIG. 27 shows an example of the screen where page-clip pasting processes are performed, according to an example embodiment of the present invention.
FIG. 28 is a flowchart of selected-page-clip pasting-position alignment processes according to an example embodiment of the present invention.
FIG. 29 shows an example of the screen where selected-page clip pasting position alignment processes are performed, according to an example embodiment of the present invention.
FIG. 30 shows an example of the screen where selected-page clip pasting position alignment processes have been performed, according to an example embodiment of the present invention.
FIG. 31 is a flowchart of document reading processes according to an example embodiment of the present invention.
FIG. 32 is a schematic diagram of a conventional electronic information board system.
FIG. 33 is a block diagram of a hardware structure of a PC according to an example embodiment of the present invention.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

An electronic device according to an example embodiment of the present invention is described with reference to the accompanying drawings. Note that various applications and modifications may be made without departing from the scope of the invention. In the drawings, like reference signs denote like elements, and overlapping description may be simplified or omitted as appropriate. The electronic device according to the present example embodiment is described as an electronic information board. However, the electronic device according to the present example embodiment is not limited to an electronic information board but may be implemented by a tablet device or the like.

The electronic device according to the present example embodiment enables a user to review what has been discussed in a meeting or the like by using the electronic whiteboard of an electronic information board. This is achieved by providing the function of selecting some pages of a document that consists of two or more pages, and pasting the selected pages on a newly-generated page directly or upon being reduced in size.

FIG. 32 is a schematic diagram of a conventional electronic information board system. In FIG. 32, an electronic information board 300 includes a display 310 and PCs 330a and 330b. The display 310 includes a touch panel 311, and displays the screen of the PCs 330a and 330b. The display 310 is connected to the PCs 330a and 330b through video graphics array (VGA) cables 320a and 320b, respectively.

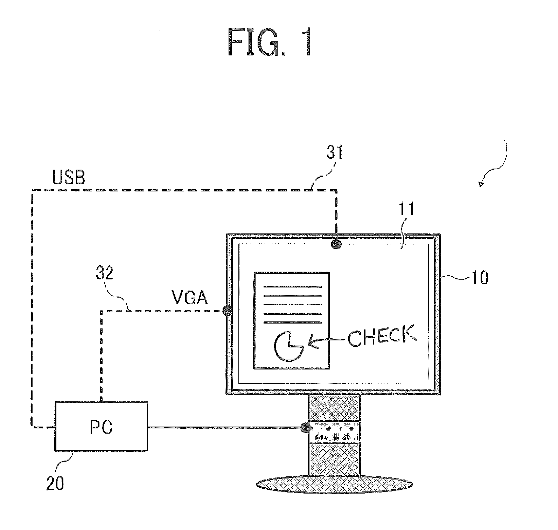

FIG. 1 illustrates an outline of the configuration of an electronic information board according to an example embodiment of the present invention. The electronic information board 1 according to the present example embodiment includes a display 10 and a PC 20. The display 10 includes a touch panel 11 for receiving hand-drawn image data or PC manipulation information, and displays the screen of the PC 20 and the hand-drawn image data. The touch panel 11 and the PC 20 are connected to each other through a USB cable 31, and the display 10 and the PC 20 are connected to each other through a VGA cable 32.

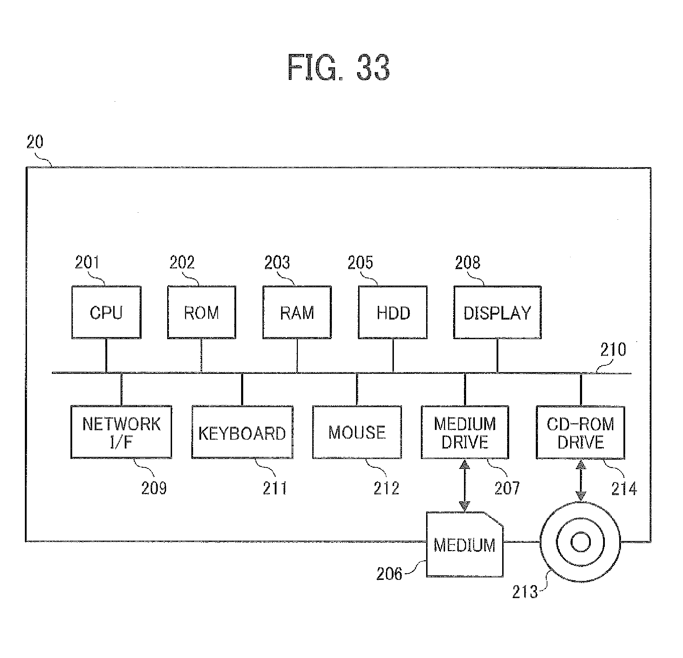

For example, FIG. 33 is a block diagram of the hardware structure of the PC 20. The PC 20 includes a CPU 201, a ROM 202, a RAM 203, a hard disk drive (HDD) 205, a medium drive 207, a display 208, a network interface (I/F) 209, a keyboard 211, a mouse 212, and a CD-ROM drive 214, which are electrically connected through a bus 210 such as an address bus or a data bus. The CPU 201 controls entire operation of the PC 20. The ROM 202 stores a control program for execution by the CPU 201, such as an initial program loader (IPL). The RAM 203 functions as a work area of the CPU 201. The HDD 205 may be replaced with a solid state disk (SSD). The medium drive 207 controls reading or writing of various data with respect to a removable recording medium 206 such as a flash memory. The display 208 displays various data such as a cursor, menu, window, character, or image. The network I/F 209 allows the management system 50 to transmit data through the communication network 2. The keyboard 211 includes a plurality of keys, each of which is used for inputting a user instruction through a character, a numeral, or a symbol. The mouse 212 allows the user to input a user instruction including, for example, selection or execution of a specific instruction, selection of an area to be processed, and instruction of cursor movement. The CD-ROM drive 214 controls reading or writing of various data with respect to a CD-ROM 213. In alternative to the CD-ROM 213, any removable recording medium may be used.

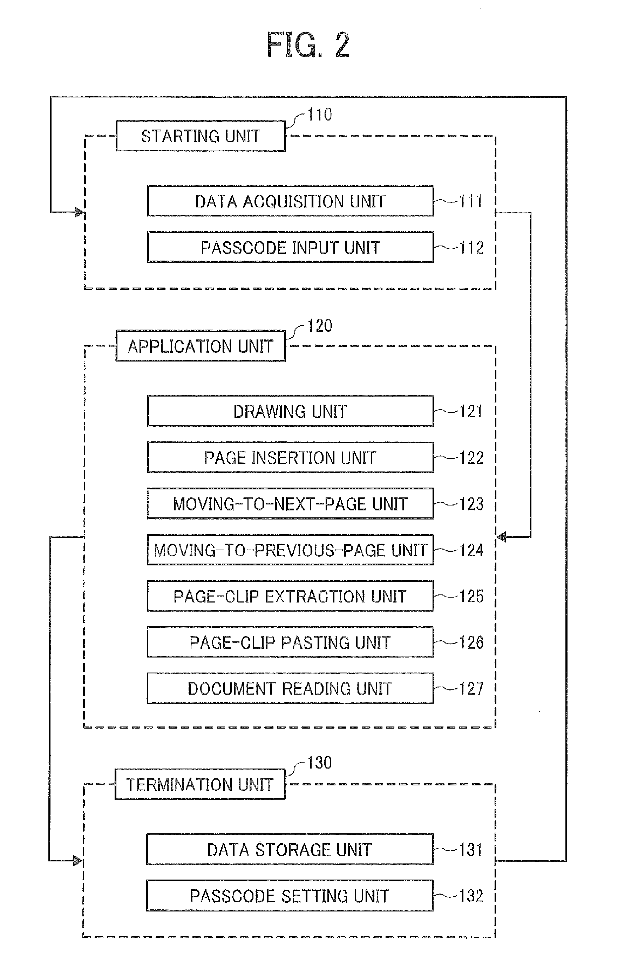

FIG. 2 illustrates functional blocks of the electronic information board 1 according to the present example embodiment. In the following description, the regular operation of the electronic whiteboard after the power of the PC 20 is turned on and before the power of the PC 20 is turned off is concerned. Thus, the description of the starting step and terminating step of the electronic whiteboard is omitted.

The electronic information board 1 according to the present example embodiment has functional blocks including a starting unit 110, an application unit 120, and a termination unit 130. The starting unit 110 includes a data acquisition unit 111 and a passcode input unit 112. The application unit 120 includes a drawing unit 121, a page insertion unit 122, a moving-to-next-page unit 123, a moving-to-previous-page unit 124, a page-clip extraction unit 125, a page-clip pasting unit 126, and a document reading unit 127. The termination unit 130 includes a data storage unit 131 and a passcode setting unit 132.

The starting unit 110 initiates operation of the electronic whiteboard. More specifically, whether a new page the electronic whiteboard is to be started or some of the stored hand-drawn image data is to be resumed is selected at the starting unit 110. The data acquisition unit 111 retrieves the data of on-page contents from the data storage unit 131 that includes an image data storage unit. The on-page contents include hand-drawn image data, background image data, and pasted page clip data and its positional information or the like.

In order to retrieve the on-page contents from data acquisition unit 111, a certain passcode is to be entered on the passcode input unit 112. The passcode entering processes are described later in detail.

The application unit 120 performs utilization processes of the electronic whiteboard. The drawing unit 121 processes, for example, the hand-drawn image data that is additionally drawn, by using the touch panel 11, on the image data displayed on the display 10.

The page insertion unit 122 inserts a new page in between the two or more pages of image data stored in the data storage unit 131. The moving-to-next-page unit 123 shifts the currently displayed page to the next page. The moving-to-previous-page unit 124 shifts the currently displayed page to the previous page. The page-clip extraction unit 125 is one example of an image data extraction unit that extracts a part of the two or more pages of image data.

The extracted part of the image data is stored in the data storage unit 131, which includes an extraction image data storage unit, in association with its attribute information and the page information of the image data from which the part of the image data has been extracted. The attribute information includes, for example, an identifier that uniquely identifies the extracted image. Hereinafter, such an identifier is referred to as a clip identifier.

The page-clip pasting unit 126 is one example of an image data pasting unit that pastes the part of the image data that has been extracted and stored in the data storage unit 131, on image data displayed on the display 10. The document reading unit 127 reads the document data stored in the data storage unit 131.

The application unit 120 can perform, for example, input of hand-drawn image data, generation of a new page, browsing of a page on which hand-drawn image data is drawn, generating new pages on which the pages of the selected document file are pasted as background images, extraction of a part of the image on a document as a page clip, browsing of the extracted page clip, and pasting of a desired page clip on a page, by using the units described above.

The termination unit 130 terminates the operation of the electronic whiteboard. More specifically, the termination unit 130 selects whether or not the data of on-page contents is to be stored in the data storage unit 131 when the electronic whiteboard is to be terminated. When the data of the on-page contents is to be stored in the data storage unit 131, a passcode is set by the passcode setting unit 132. As soon as the termination processes end, initiation processes start again.

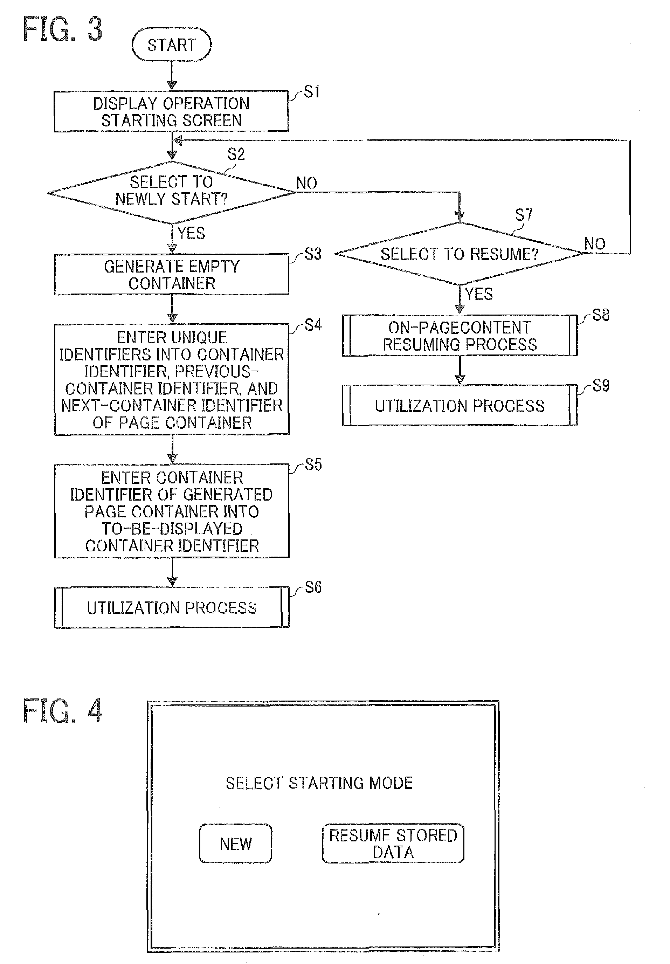

Next, electronic whiteboard starting processes according to an example embodiment of the present invention are described below with reference to FIGs. 3 and 4. Firstly, a container object is described. In the present example embodiment, the contents displayed on the display 10 are controlled based on an objected called page container object (hereinafter, this will be referred to as a page container). More specifically, page information including hand-drawn image data, a selected background image, and a pasted page clip are controlled using a page container.

A page container has a data structure consisting of a container identifier, a previous-container identifier, a next-container identifier, an update time, hand-drawn image data, a set background image, the clip identifiers of the page clip containers that correspond to all the pasted page clips, and position information. The container identifier identifies a page container. The previous-container identifier is used to refer to the container of the previous page, and the next-container identifier is used to refer to the container of the next page. The update time indicates the time at which data is stored (updated). The position information indicates the positions of all the pasted page clips on the screen. Accordingly, the page container has a linked-list structure that enables easy page shifting.

In a similar manner, in the present example embodiment, the extracted page clip is managed by a page clip container object (a page clip container object is referred to as a page clip container). A page clip container has a data structure consisting of a clip identifier, the container identifier of a page from which a page clip has been extracted, and data of the extracted image. The clip identifier identifies a page clip container.

A container identifier and a clip identifier are realized, for example, by a universally unique identifier (UUID) where time information is used as a seed. The hand-drawn image data is realized, for example, by the JPEG image data of the entire screen. Alternatively, the hand-drawn image data may be realized by stroke data in scalable vector graphics (SVG) format, which is more complex. A background image and screen clip can also be realized by using JPEG image data.

In the starting processes, the starting unit 110 displays a starting screen on a display 10 as illustrated in FIG. 4 to start the operation of an electronic whiteboard (step S1). At this starting screen, selection is made to newly start the operation of the electronic whiteboard, or to start to use the stored data in which some information has already been written (step S2). When an icon for newly starting the operation of the electronic whiteboard is selected ("YES" in step S2), a one-page empty container is generated to prepare for newly starting the operation of the electronic whiteboard (step S3).

Then, unique identifiers are entered into the fields of a container identifier, a previous-container identifier, and a next-container identifier, respectively, and a time at which the container is generated is entered into the field of an update time (step S4). At this time, a storage area for the hand-drawn image data is empty. Next, the container identifier of the generated page container is entered into the field of a to-be-displayed container identifier that identifies a page container to be displayed (step S5). Such an identifier of a page container to be displayed is preferred to as a to-be-displayed container identifier. The to-be-displayed container identifier identifies a page container to be displayed.

When the above processes are completed, electronic whiteboard utilization processes start (step S6).

On the other hand, when an icon for newly starting the operation of the electronic whiteboard is not selected ("NO" in step S2) and an icon for resuming is selected ("YES" in step S7), on-page content resuming processes are performed (step S8), and then electronic whiteboard utilization processes are performed (step S9).

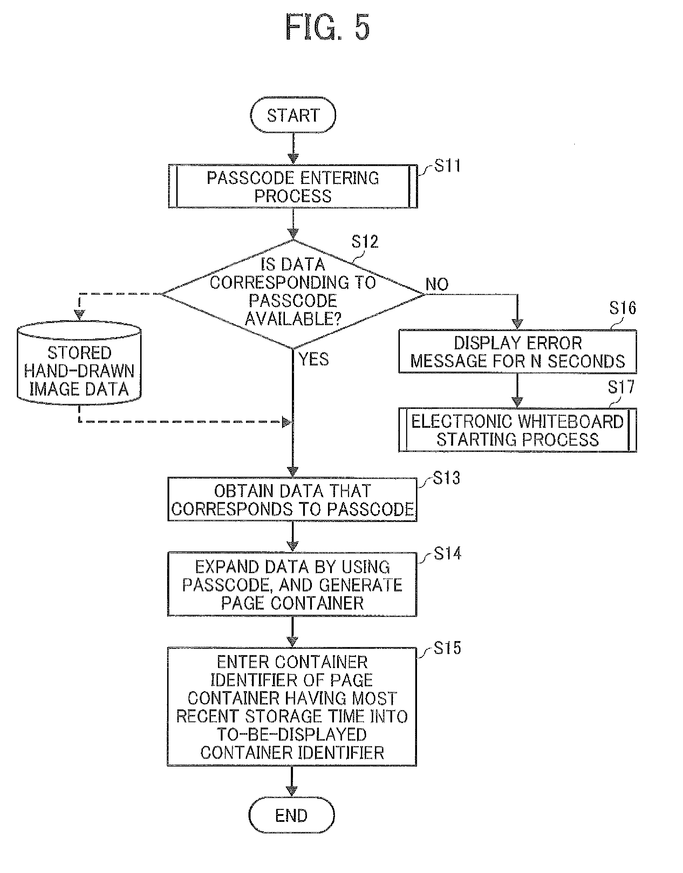

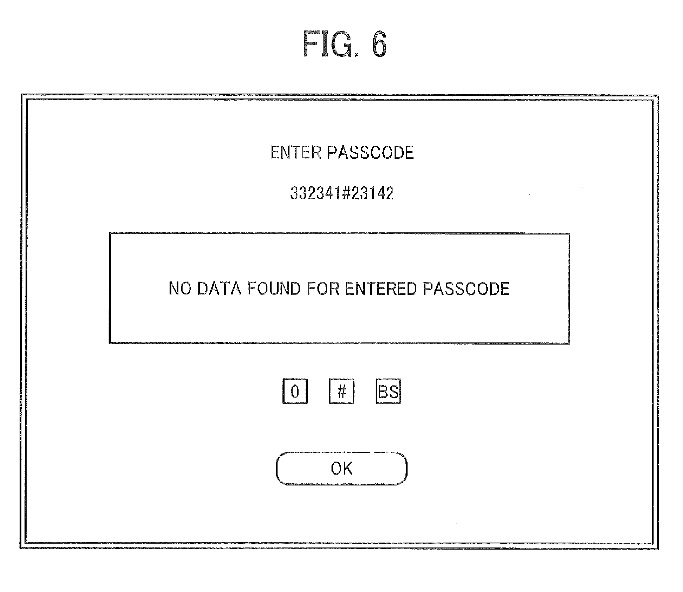

Next, on-page content resuming processes according to an example embodiment of the present invention are described below with reference to FIGs. 5 and 6. Firstly, passcode entering processes are performed (step S11). The passcode entering processes are described later in detail.

When a passcode is entered, whether or not the data of on-page contents is stored in association with the entered passcode is checked (step S12). In the present example embodiment, the data of on-page contents is stored in a specified directory, with the name of the file being the hash value of the entered passcode. The on-page content resuming processes are achieved by checking whether or not the file with the same file name as the hash value of the passcode exists in a specified directory.

Note that a hash value may be calculated by using an existing technique such as message digest (MD) 5. Moreover, a passcode and the data of a page container may be recorded and managed in a suitable format by using a database system.

When the data of on-page contents is stored in association with the entered passcode ("YES" in step S12), the data that corresponds to the passcode is obtained (step S13). As all the page container information and all the page clip information are packaged with the password in the form of stored data, the data is expanded by using the passcode (step S14). The expanded page container information and page clip information are entered into the corresponding fields of the generated page container and page clip container, respectively.

Next, the container identifier of the page container having the most recent storage time is entered into a to-be-displayed container identifier based on the storage time of the page container (step S15), and the process terminates. By updating the to-be-displayed container identifier with the container identifier of the page container having the most recent storage time, the lastly-used page in the previous session is displayed in electronic whiteboard utilization processes.

On the other hand, when the data of on-page contents is not stored in association with the entered passcode ("NO" in step S12), an error message is displayed for a certain period of time, for example, for N seconds (step S16), and the process automatically proceeds to the electronic whiteboard starting process (step S17). FIG. 6 illustrates an error message displayed on a screen, according to an example embodiment of the present invention. As shown in FIG. 6, the message "NO DATA FOUND FOR ENTERED PASSCODE" is displayed for a certain period of time.

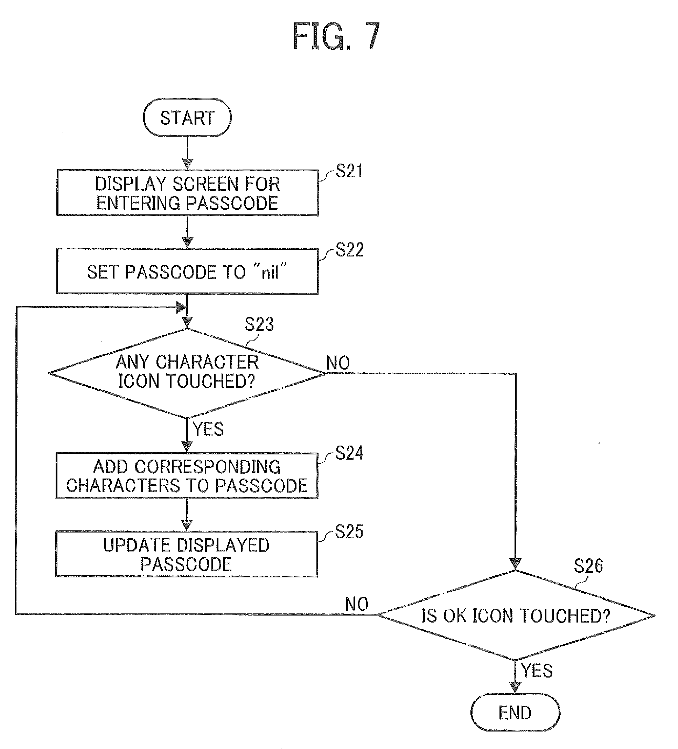

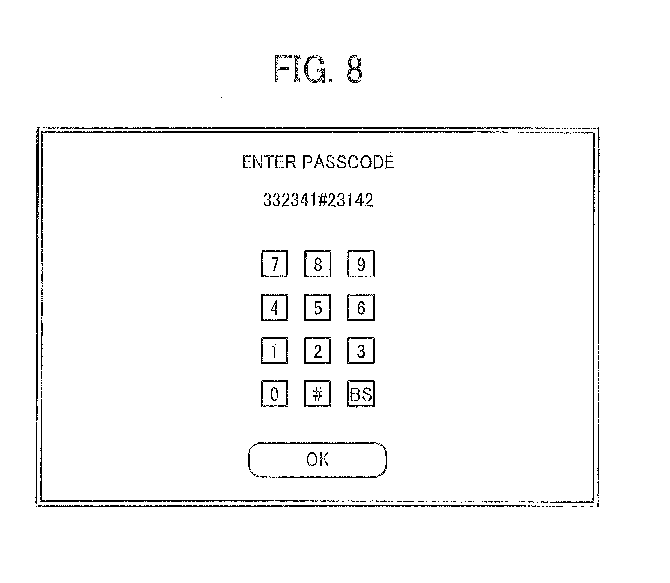

Next, passcode entering processes are described below with reference to FIGs. 7 and 8. When the process starts, firstly, a screen for entering a passcode is displayed (step S21). At this time, the passcode is set to "nil" (step S22).

FIG. 8 shows an example of the screen for entering a passcode, according to an example embodiment of the present invention. The icons "1, 2, 3, 4, 5, 6, 7, 8, 9, 0, #" displayed on the screen are used to enter passcode character strings. When some of these icons are touched ("YES" in step S23), the corresponding characters are added to the passcode (step S24). Note that the icon "BS" is used to delete the entered passcode.

The entered passcode is displayed above the icons, while being updated according to the input through the icons (step S25). In the present example embodiment, the entered passcode is displayed just as it is, but may not be displayed. Next, it is determined that the passcode input is finished when the icon "OK" is selected ("YES" in step S26), and the process terminates. Then, the passcode is passed to the process that triggered the passcode entering process.

When none of the icons for entering character strings is touched ("NO" in step S23) and the "OK" icon is not touched ("NO" in step S26), the operation returns to S23 to repeat the process of checking whether or not any of the icons for entering character strings is touched(step S23).

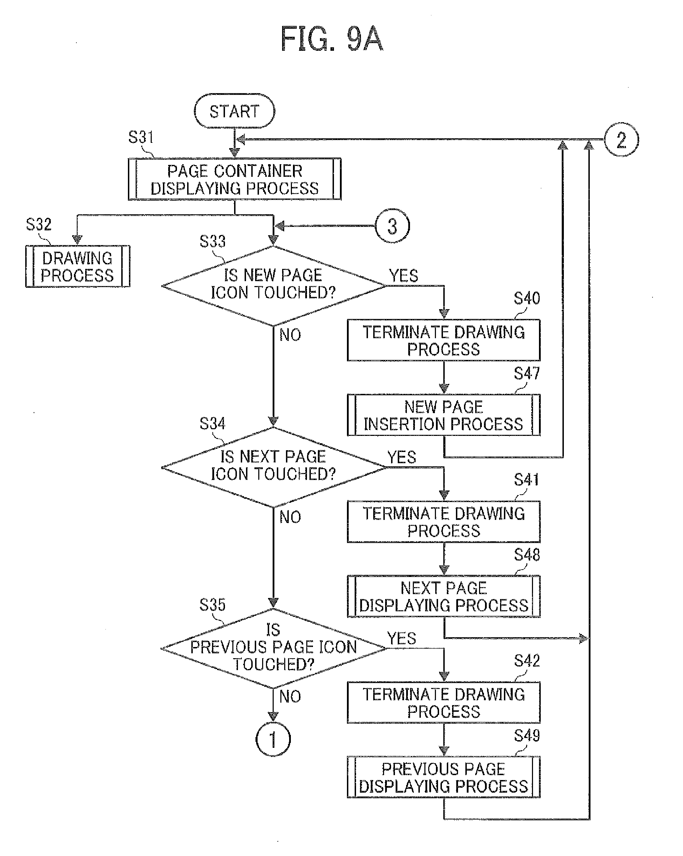

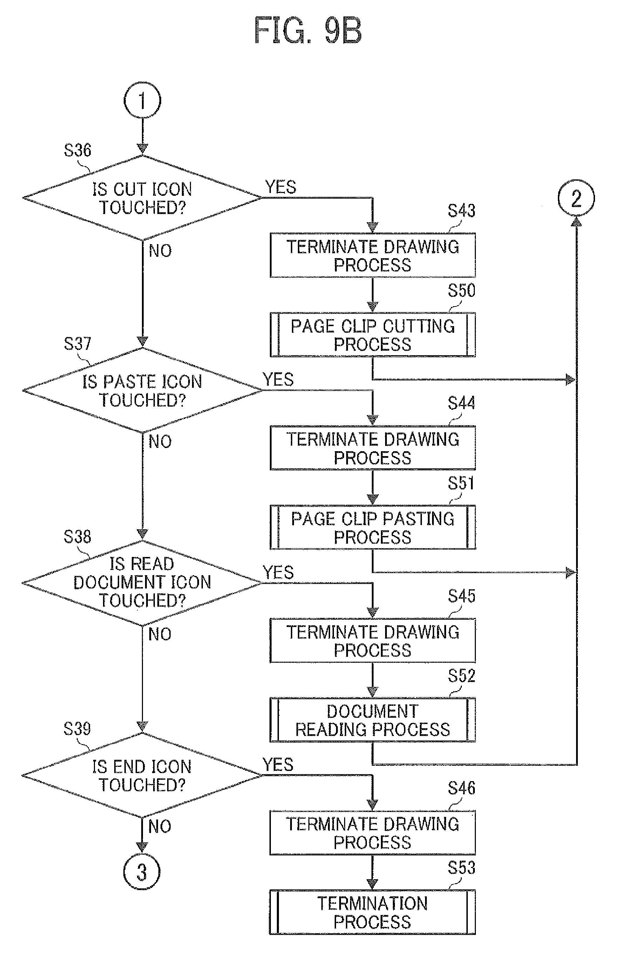

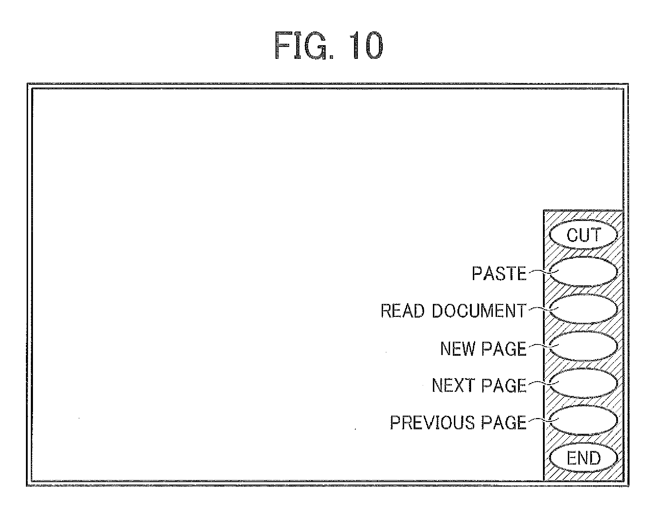

Next, the electronic whiteboard utilization processes are described below with reference to FIGs. 9A and 9B to FIG. 11. When the utilization processes start, firstly, the processes of displaying a page container are started (step S31). In the page container displaying processes, an electronic whiteboard application screen is displayed as depicted in FIG. 10. As depicted in FIG. 10, icons "NEW PAGE", "NEXT PAGE", "PREVIOUS PAGE", "CUT", "PASTE", "READ DOCUMENT", and "END" are arranged on the electronic whiteboard application screen.

After the electronic whiteboard application screen is displayed, the data of on-page contents is displayed based on the page container that has been entered into the to-be-displayed container identifier in the electronic whiteboard starting processes. When a new page is to be started, the page container indicated by the to-be-displayed container identifier does not hold any of the hand-drawn image data, background image data, and the pasted page clip data. Thus, as in the electronic whiteboard application screen illustrated in FIG. 10, no hand-drawn image data is displayed on the screen.

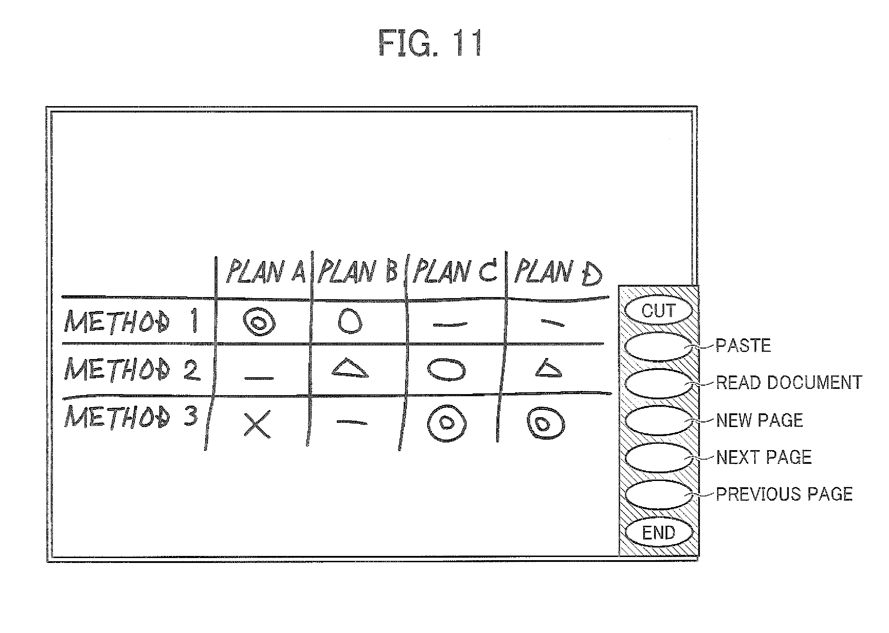

On the other hand, when the stored hand-drawn image data is resumed, the page container specified by the to-be-displayed container identifier holds the lastly-stored (lastly-used) hand-drawn image data, the background image data, and the pasted page clip data. Accordingly, the data of the on-page contents is displayed as in the electronic whiteboard application screen illustrated in FIG. 11 (step S32).

Next, the processes of generating a new page, shifting a page, extracting a page clip from the displayed page, pasting a page clip on the displayed page, and reading a document file are described with reference to an example electronic whiteboard application screen illustrated in FIG. 10.

When the "NEW PAGE" icon is touched ("YES" in step S33), the drawing processes are terminated (step S40), and a new page is inserted next to the present page in the page insertion process (step S47). Accordingly, the display screen is cleared.

When the icon "NEW PAGE" is not touched ("NO" in step S33) but the icon "NEXT PAGE" is touched ("YES" in step S34), the drawing processes are terminated (step S41), and moving-to-next-page processes are performed to display the data of the on-page contents of the next page (step S48).

When the icon "NEXT PAGE" is not touched ("NO" in step S34) but the icon "PREVIOUS PAGE" is touched ("YES" in step S35), the drawing processes are terminated (step S42), and moving-to-previous-page processes are performed to display the data of the on-page contents of the previous page (step S49).

When the icon "PREVIOUS PAGE" is not touched ("NO" in step S35) but the icon "CUT" is touched ("YES" in step S36), the drawing processes are terminated (step S43), and page clip extraction processes are performed to cut the page of the specified document (step S50). Then, the cut page is stored as a page clip.

When the icon "CUT" is not touched ("NO" in step S36) but the icon "PASTE" is touched ("YES" in step S37), the drawing processes are terminated (step S44), and page-clip pasting processes are performed to paste the page clip of the specified document at a desired position (step S51).

When the icon "PASTE" is not touched ("NO" in step S37) but the icon "READ DOCUMENT" is touched ("YES" in step S38), the drawing processes are terminated (step S45), and document reading processes are performed to insert over the present document the pages on which the pages of the specified document files are pasted as background images and the first page of these inserted pages is displayed (step S52).

When the icon "READ DOCUMENT" is not touched ("NO" in step S38) but the icon "END" is touched ("YES" in step S39), the drawing processes are terminated (step S46), and the process shifts to electronic whiteboard termination processes (step S53). Note that the links of the pages are looped in the present example embodiment, and thus there is no termination in the page shifting.

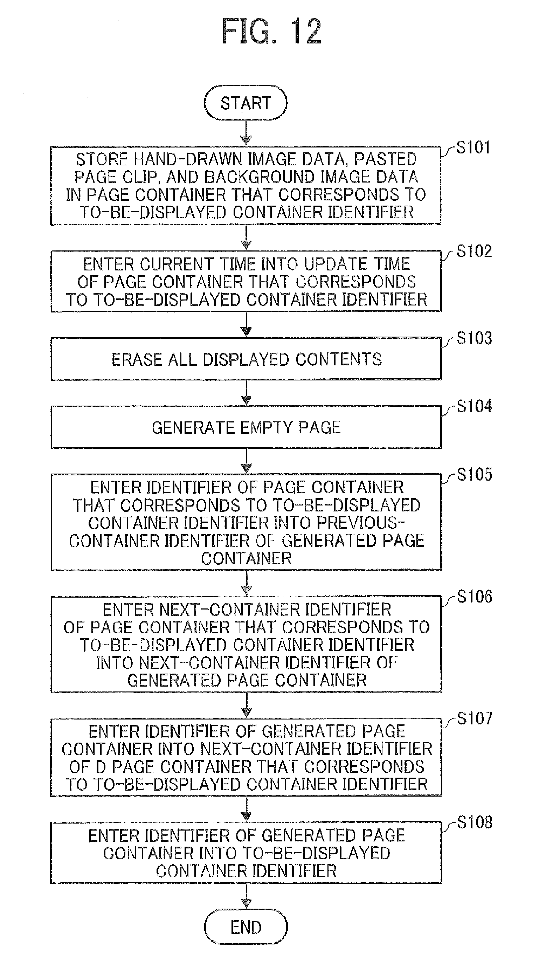

FIG. 12 is a flowchart of page insertion processes according to an example embodiment of the present invention. Once the page insertion processes start, firstly, a page container to be displayed (hereinafter, this will be referred to as "display target page container") is specified by the to-be-displayed container identifier. Then, the hand-drawn image data drawn on the current screen, the pasted page clip, and the background image data are stored in the page container of a display target ("display target page container") and the page clip container that corresponds to the to-be-displayed container identifier (step S101).

At the same time, the current time is entered into the update time of the page container (step S102). Then, the displayed contents are all erased (step S103).

Next, an empty page container is generated (step S104), and an identifier of the display target page container is entered into the previous-container identifier of the generated page container (step S105). Moreover, a next-container identifier of the display target page container is entered into the next-container identifier of the generated page container (step S106).

Further, an identifier of the generated page container is entered into the next-container identifier of the display target page container (step S107), and the identifier of the generated page container is also entered into the to-be-displayed container identifier (S108). Then, the process terminates. The page container generated in step S104 appears next to the page container that was being displayed, and the page container generated in step S104 is a page container generated by the display target page container.

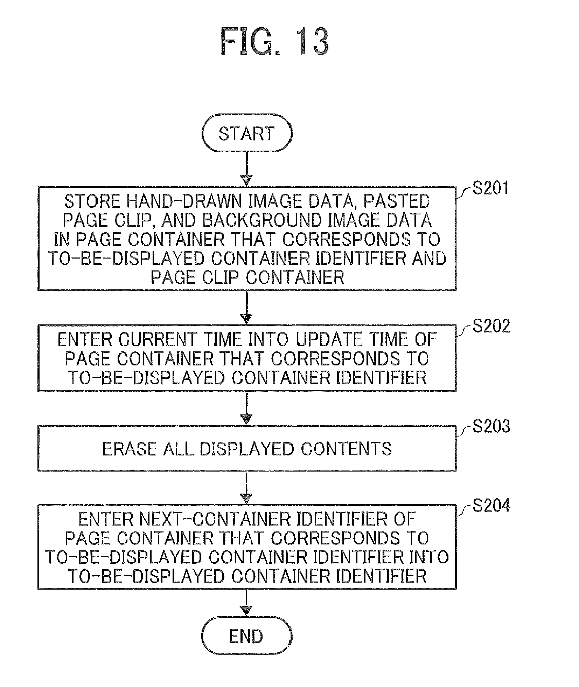

FIG. 13 is a flowchart of moving-to-next-page processes according to an example embodiment of the present invention. Once the moving-to-next-page processes start, firstly, a display target page container is specified by the to-be-displayed container identifier. Then, the hand-drawn image data drawn on the current screen, the pasted page clip, and the background image data are stored in the display target page container and the page clip container that corresponds to the display target page container (step S201).

At the same time, the current time is entered into the update time of the page container (step S202). Then, the displayed contents are all erased (step S203). Then, the next-container identifier of a display target page container is entered into the to-be-displayed container identifier (step S204), and the process terminates. According to these processes, the display target shifts to the next page container.

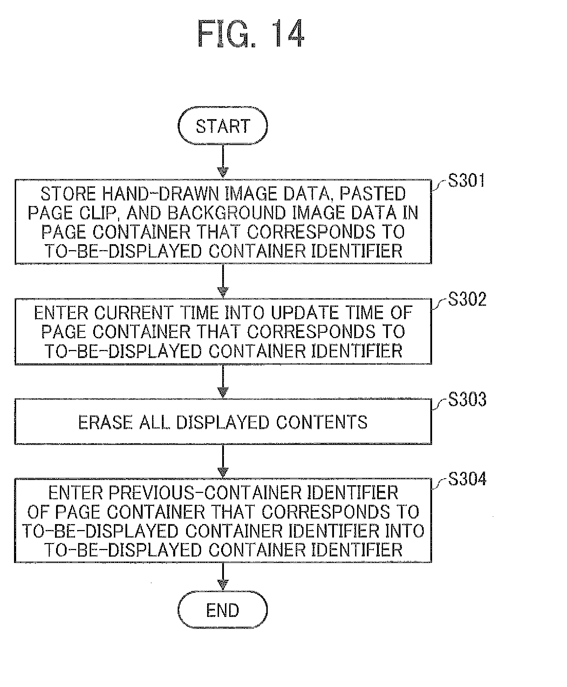

FIG. 14 is a flowchart of moving-to-previous-page processes according to an example embodiment of the present invention. Once the moving-to-next-page processes start, firstly, a display target page container is specified by the to-be-displayed container identifier. Then, the hand-drawn image data drawn on the current screen, the pasted page clip, and the background image data are stored in the display target page container and the page clip container that corresponds to the display target page container (step S301).

At the same time, the current time is entered into the update time of the page container (step S302). Then, the displayed contents are all erased (step S303). Then, the previous-container identifier of a display target page container is entered into the to-be-displayed container identifier (step S304), and the process terminates. According to these processes, the display target shifts to the previous page container.

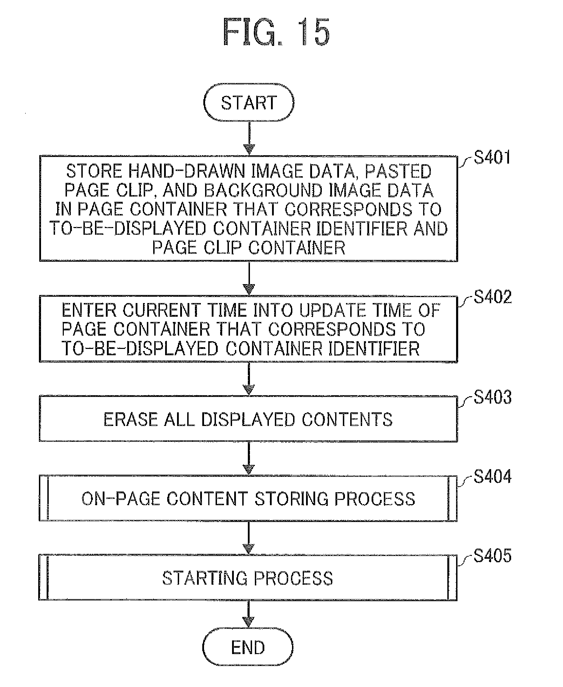

FIG. 15 is a flowchart of electronic whiteboard terminating processes according to an example embodiment of the present invention. Once the moving-to-next-page process starts, firstly, a display target page container is specified by the to-be-displayed container identifier. Then, the hand-drawn image data drawn on the current screen, the pasted page clip, and the background image data are stored in the display target page container and the page clip container that corresponds to the display target page container (step S401).

At the same time, the current time is entered into the update time of the page container (step S402). Then, the displayed contents are all erased (step S403). Next, the on-page contents are stored in order to store all the page containers (step S404), and the process then shifts to the electronic whiteboard starting process (step S405).

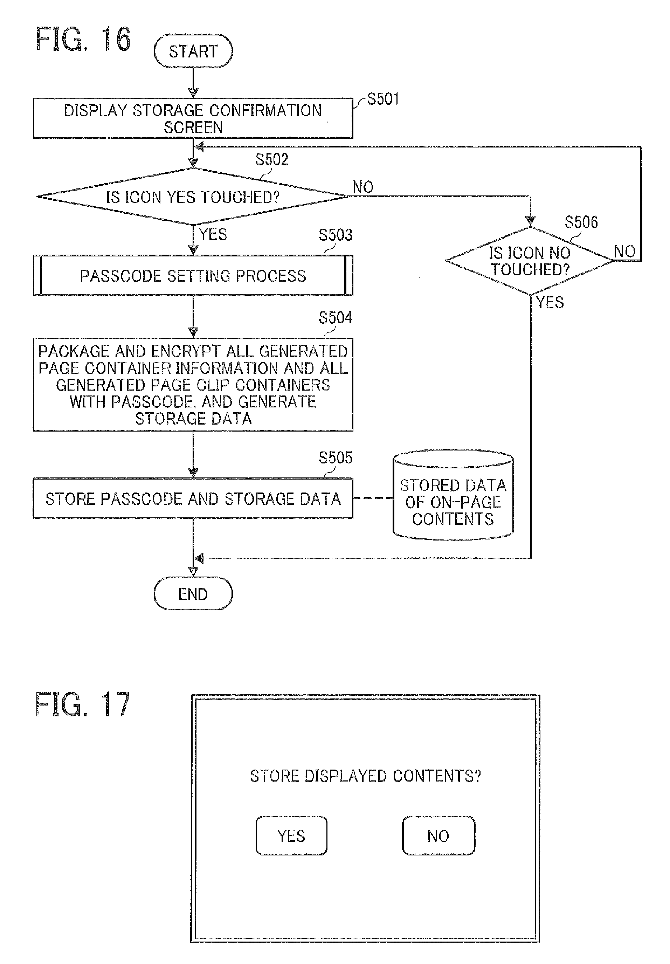

Next, the on-page content storing processes are described below with reference to FIGs. 16 and 17. When the processes start, firstly, a storage confirmation screen is displayed to ask whether or not to store the data of the on-page contents (step S501). FIG. 17 shows an example of the storage confirmation screen, according to an example embodiment of the present invention. When the icon "YES" on the screen is not touched ("NO" in step S502) but the icon "NO" is touched ("YES" in step S506), the data of the on-page contents is not stored, and the process terminates.

On the other hand, when the icon YES" is touched ("YES" in step S502), a passcode is obtained by performing passcode setting processes (step S503) described below. Then, all the page container information and all page clip containers generated while the electronic whiteboard is being used are packaged and encrypted with a password based on the obtained passcode, and the storage data is generated (step S504).

The term all the page container information includes the stored container identifiers, the previous-container identifiers, the next-container identifiers, the update times, the hand-drawn image data, the set background images, the clip identifiers of the page clip containers that correspond to all the pasted page clips, and the position information of all the pasted page clips on the screen.

The term all the page clip containers include the clip identifiers that identify the page clip containers, the container identifiers of the pages from which page clips have been extracted, and the extracted image data.

Then, the storage data is stored in a specified directory, with the name of the file being the hash value of the entered passcode (step S505). The storage data may be packaged by using existing file compression methods such as ones that uses ".zip" format with passwords. When the storage processes are complete, the process terminates.

In the present example embodiment, when a passcode is set, overlaps of the passcode may be prevented by checking whether or not the hash value of the set passcode has already been used as the file name in a specified directory.

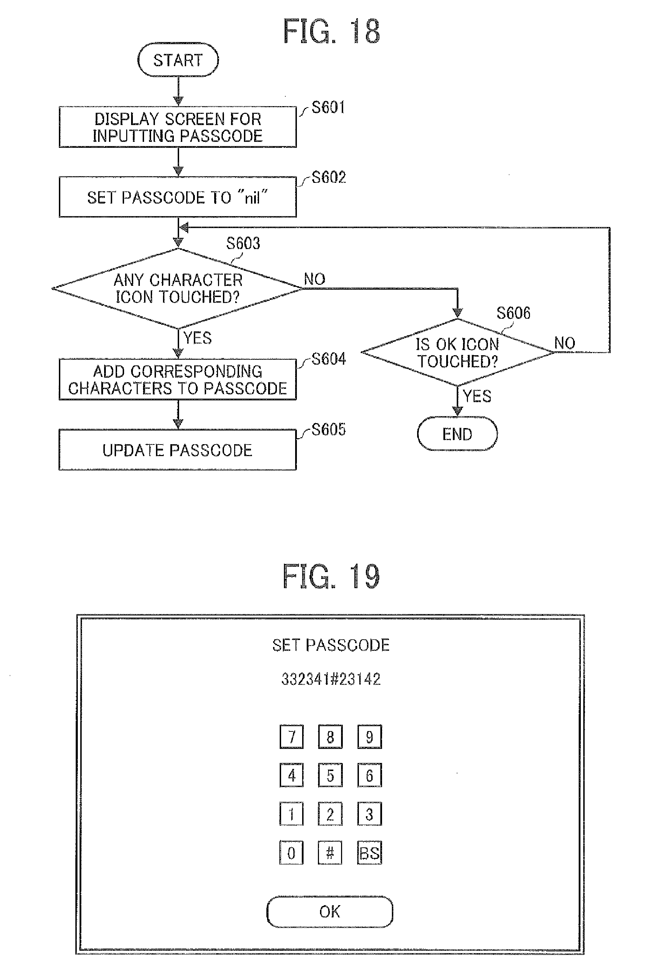

Next, the passcode setting processes are described below with reference to FIGs. 18 and 19. The passcode setting processes are similar to the flow of the passcode entering processes, but a passcode setting screen that is displayed when the passcode setting process starts is different from the passcode entering screen. FIG. 19 shows an example of the passcode setting screen according to an example embodiment of the present invention.

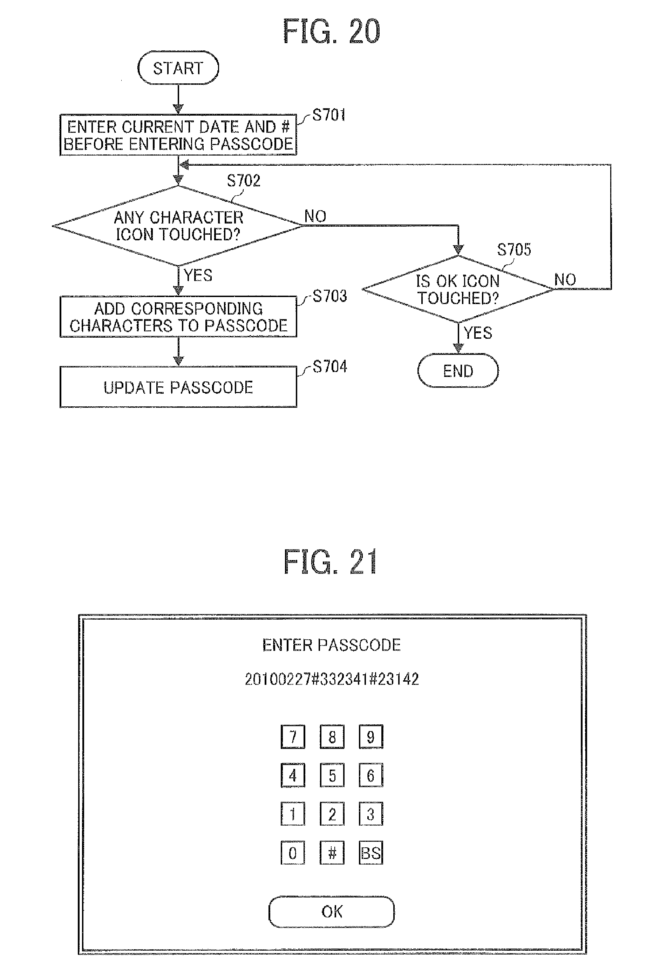

Next, passcode-plus-date setting processes are described below with reference to FIGs. 20 and 21. As described above, the passcode that is the same as the previously-set passcode may be set. It is desired that the date of use be added to the passcode to prevent setting of two or more identical passcodes.

The passcode setting processes are similar to the flow of the passcode entering processes, but the date of use is preliminarily entered as an initial value of the passcode in the passcode setting processes, which is different from the passcode entering processes. As shown in the passcode-plus-date setting screen of FIG. 21, assuming that the date of use is February 27, 2010, the character strings of 20100227" is inserted to the passcode field when the process starts.

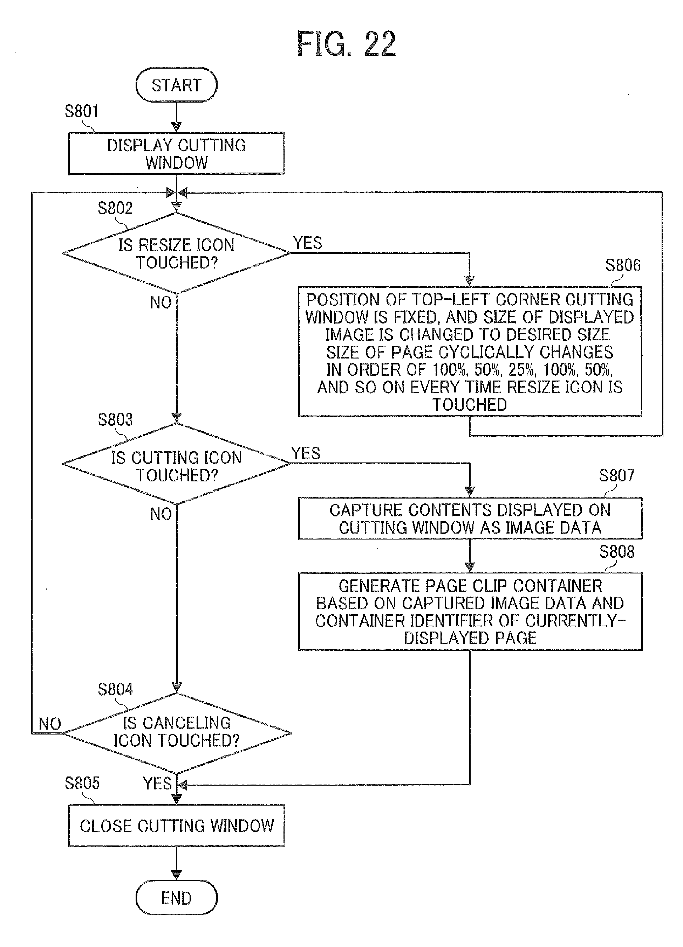

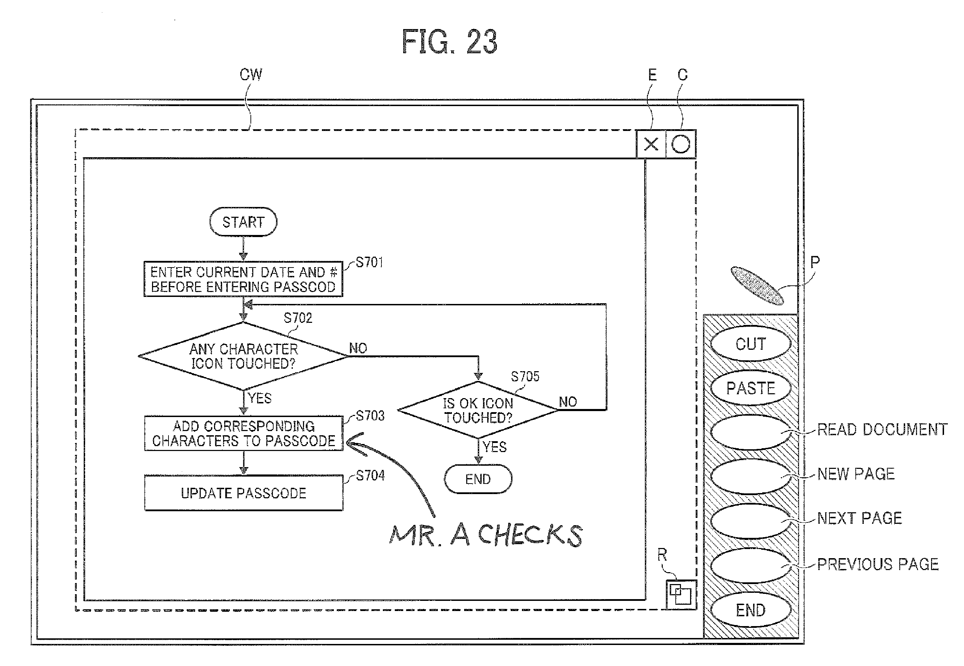

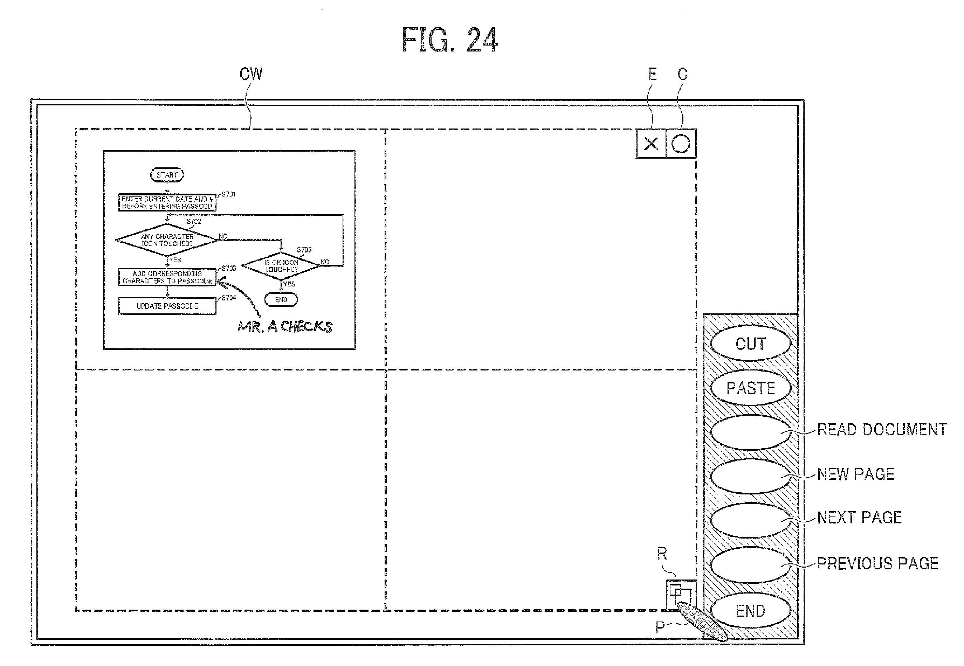

Next, page clip extraction processes are described below with reference to FIGs. 22 to 24. FIG. 22 shows the page clip extraction processes according to an example embodiment of the present invention. In FIGs. 23 and 24, example image data is displayed in a cutting window CW, where the hand-drawn image data "Mr. A checks" is drawn.

As shown in FIG. 23, the icons "CUT", "PASTE", "READ DOCUMENT", "NEW PAGE", "NEXT PAGE", "PREVIOUS PAGE", and "END" are arranged on bottom-right of the screen. When one of these icons is touched by a pointing pen P or the like, the corresponding process starts. The icons "NEW PAGE", "NEXT PAGE", and "PREVIOUS PAGE" are used to shift to the corresponding page.

FIG. 23 shows an example of the screen where page clip extraction processes are in progress. When the icon "CUT" is touched on the screen, the page clip extraction process starts. When the process starts, a cutting window (CW) is firstly displayed on the screen (step S801). In the cutting window (CW), a cutting icon "C" for executing a cutting process, and a canceling icon "E" for canceling the page clip extraction process are arranged.

As illustrated in FIG. 24, a user touches a resize icon "R" by using his/her finger or a pointing pen P to change the size of the image displayed in the cutting window (CW) to a desired size ("YES" in step S802). In the present example embodiment, the size of the page cyclically changes in the order of 100%, 50%, 25%, 100%, 50%, and so on every time the resize icon "R" is touched (step S806). A resizing unit that resizes the image in the cutting window CW when a resize icon "R" is touched is referred to as an extraction image data size changing unit.

The cutting icon "C" ("YES" in step S803) is touched to cut and capture the contents included in the cutting window (CW) as image data (step S807). Then, the captured image data is stored in the generated page clip container together with the container identifier of a currently-displayed page and a clip identifier that is automatically generated by a system (step S808).

Assuming that the system according to the present example embodiment operates, for example, in Windows (registered trademark), the system may be realized by using the application programming interface (API) provided by the graphic-drawing function called graphics device interface (GDI).

Then, when the cutting icon "C" is touched and the processes of storing the extracted page in the page clip container terminate, or when the canceling icon "E" is touched ("YES" in step S804), the page size of the cutting window (CW) returns to 100% and the cutting window (CW) closes (step S805). Accordingly, the page clip extraction process terminates.

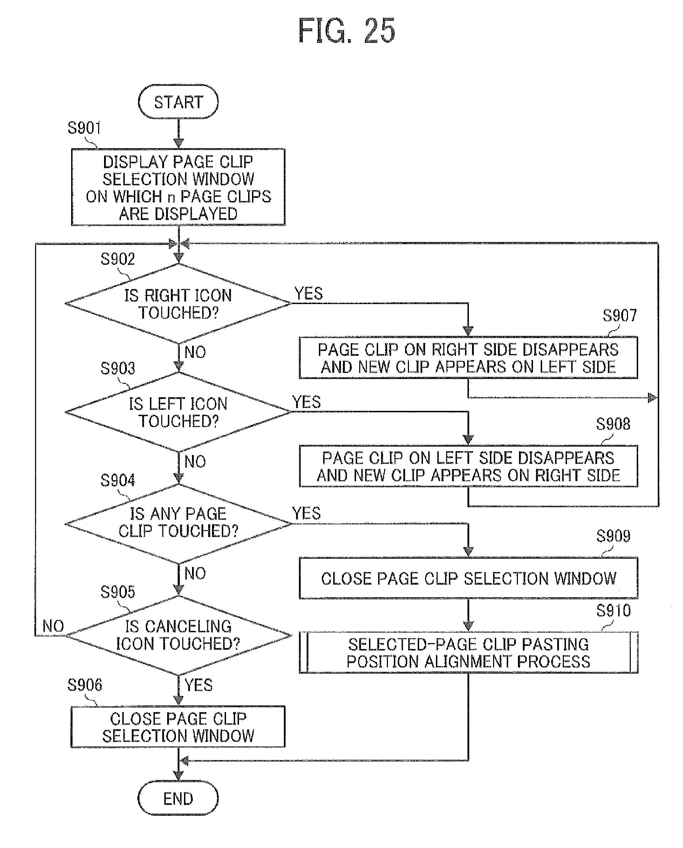

Next, the page-clip pasting processes are described below with reference to FIGs. 25 to 27. FIG. 25 shows the page-clip pasting processes according to an example embodiment of the present invention.

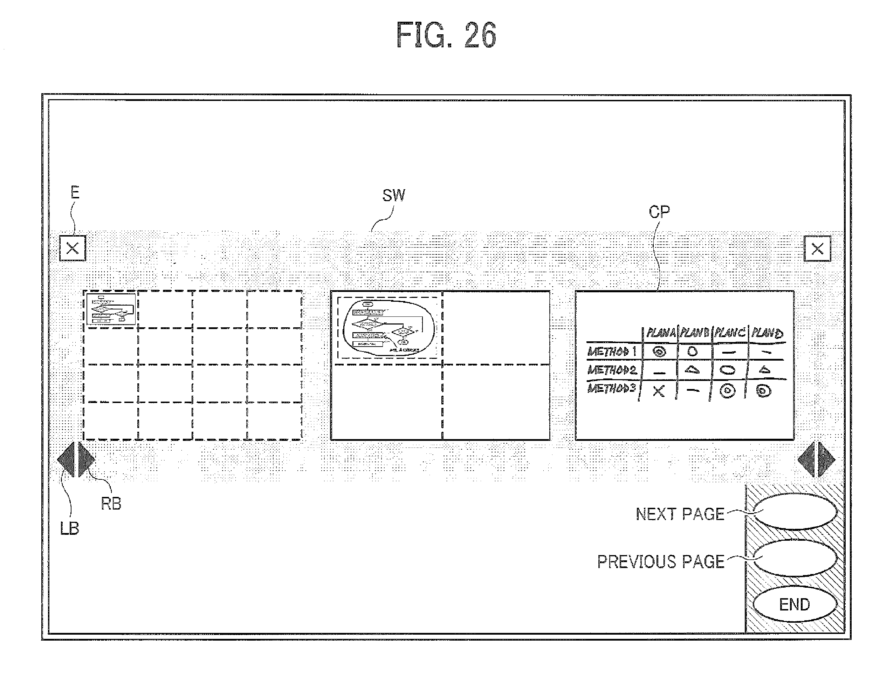

FIG. 26 illustrates an example of the screen where the page-clip pasting processes are performed, according to an example embodiment of the present invention. When the icon "PASTE" is touched on the screen, the page-clip pasting process starts. When the process starts, firstly, a page clip selection window (SW) appears on the screen (step S901). In the page clip selection window (SW), the image data contained in latest n page clip containers, i.e., page clips (CP), are displayed. In FIG. 26, three latest page clips (CP) are displayed.

On the page clip selection window (SW), a left button LB and a right button (RB) for switching the page clips (CP) are arranged in addition to the page clips (CP). Further, the canceling icons "E" for canceling the page-clip pasting process are arranged on the page clip selection window (SW).

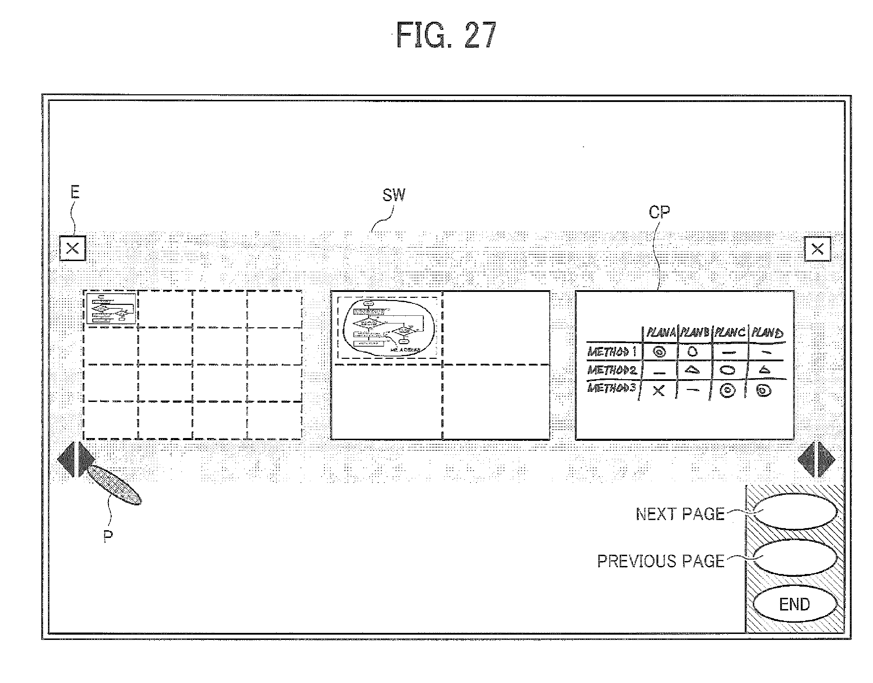

As illustrated in FIG. 27, if a right button (RB) is touched by a finger or the pointing pen P ("YES" in step S902), the page clip (CP) on the right side shown in FIG. 26 disappears and a new clip (CP) appears on the left side (step S907). The order in which the page clips (CP) are displayed may be the order in which these page clips (CP) were extracted, i.e., the order in which the corresponding page clip containers were generated.

Alternatively, the page clips (CP) may be displayed in a more complicated order. For example, the page clips (CP) may be classified according to size and then be displayed in the order in which the corresponding page clip containers were generated. If a right button (RB) is not touched by a finger or the pointing pen P ("NO" in step S902) but a left button (LB) is touched ("YES" in step S903), the page clip (CP) on the left side disappears and a new clip (CP) appears on the right side (step S908).

Then, when the user selects and touches a desired page clip (CP) ("YES" in step S904), the page clip selection window (SW) closes (step S909), and the process shifts to selected-page-clip pasting-position alignment processes (step S910). If the canceling icon "E" is touched ("YES" in step S905), the page-clip pasting process terminates, and the page clip selection window (SW) closes (step S906).

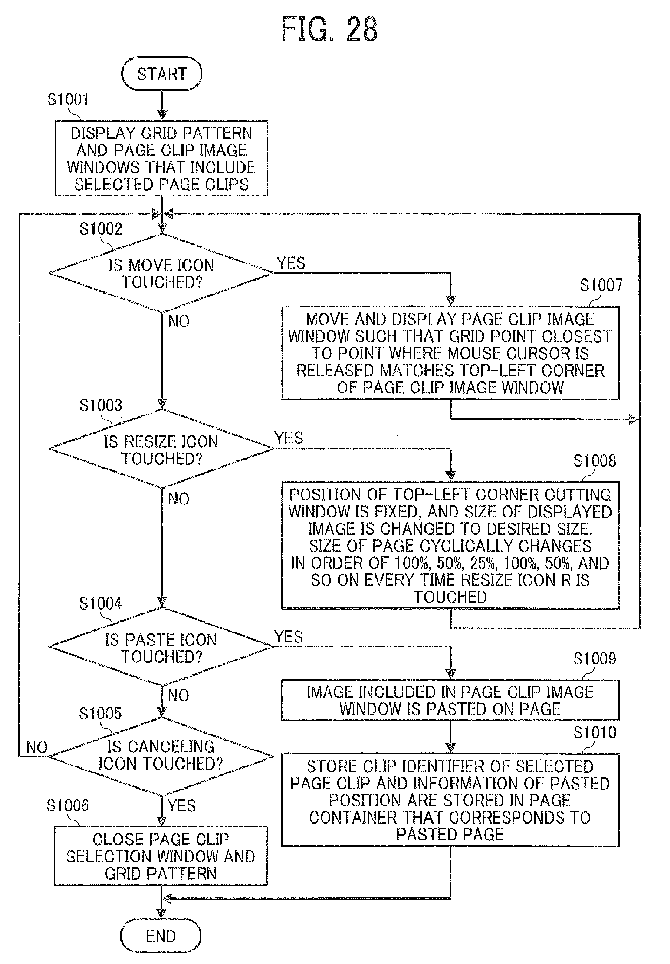

Next, the selected-page-clip pasting-position alignment processes are described below with reference to FIGs. 28 to 30. FIG. 28 is a flowchart of the selected-page-clip pasting-position alignment processes according to an example embodiment of the present invention.

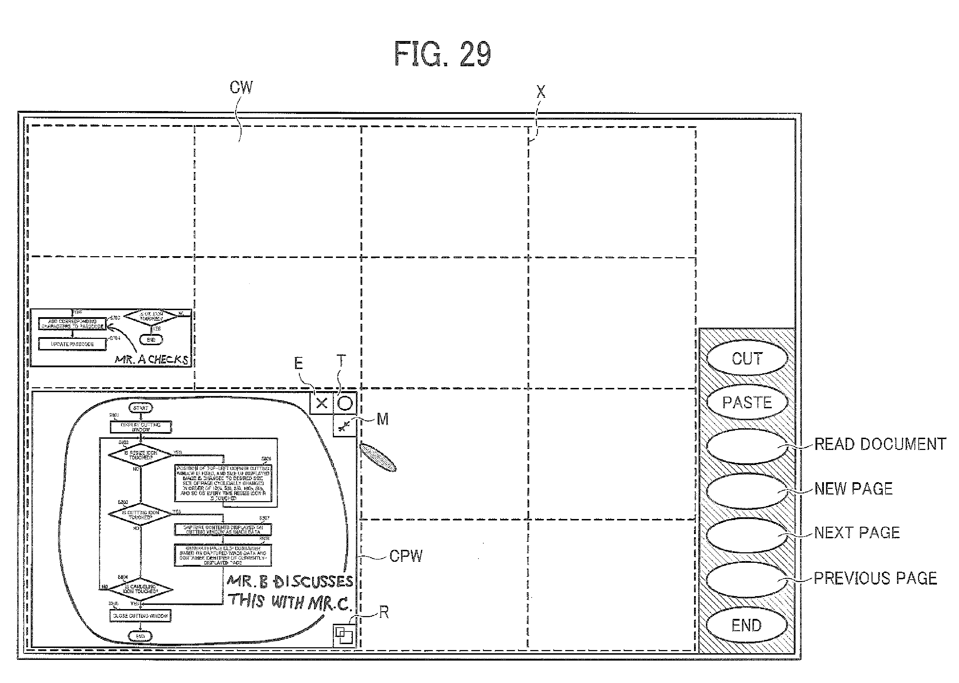

FIG. 29 shows an example of the screen of the selected-page-clip pasting-position alignment process. When a certain page clip is selected from the page clip selection window (SW) in the page-clip pasting process, the selected-page-clip pasting-position alignment process starts. When the process starts, firstly, a grid pattern X that divides the page into patterns and page clip image window (CPW) that includes the selected page clips appear on the screen (step S1001).

The initial size of the page clip image window (CPW) is the same as the size of the selected page clip. The resize icon "R" is arranged in the page clip image window (CPW) to resize the page clip image window (CPW). A resizing unit that resizes the page clip image window (CPW) when the resize icon "R" is touched, according to an example embodiment of the present invention, is referred to as a pasted-image data size changing unit.

The initially-displayed position of the page clip image window (CPW) is defined by a preset value of the system. For this reason, a move icon "M" is arranged in the page clip image window (CPW) to move the page clip image window (CPW). The position of the page clip image window (CPW) is automatically adjusted such that the top-left end of the page clip image window (CPW) matches the closest grid point.

Further, a paste icon "T" for pasting a page clip and the canceling icon "E" for canceling the page-clip pasting process are arranged in the page clip image window (CPW).

The move icon "M" and the resize icon "R" are used as necessary to change the size of the page clip image window (CPW) to a desired size and move the page clip image window (CPW) to a desired position. In other words, when the move icon is touched ("YES" in step S1002), the page clip image window (CPW) is moved such that, for example, the grid point closest to the point where a mouse cursor is released matches the top-left corner of the page clip image window (CPW) (step S1007).

When the resize icon is touched ("YES" in step S1003), the position of the top-left corner of the page clip image window (CPW) is fixed, and the page clip image window (CPW) is displayed upon being resized (step S1008).

Then, when a paste icon "T" is touched ("YES" in step S1004), the screen image included in the page clip image window (CPW) is pasted on the page as image data (step S1009). Then, the clip identifier of the page clip container that corresponds to the pasted page clip, and the position information on the page at which the clip is pasted are stored in the page container that corresponds to the pasted page (step S1010). A storage unit that stores the position information described above is referred to as a position information storage unit.

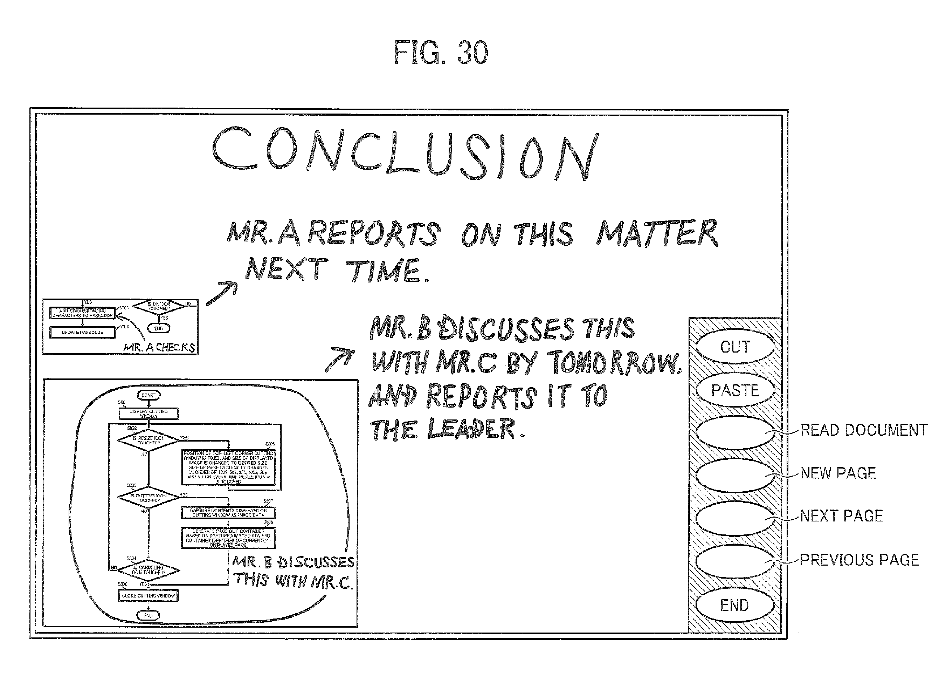

When the paste icon "T" is touched and the pasting process then terminates, or when the canceling icon "E" is touched ("YES" in step S1005), the page clip image window (CPW) and the grid pattern X close (step S1006). Accordingly, the selected-page-clip pasting-position alignment process terminate. For reference purposes, an example of the screen where the page-clip pasting processes are repeated and a page for reviewing the result of a meeting is generated by adding hand-drawn image data is shown in FIG. 30.

In the page-clip pasting processes described above, it is assumed that a plurality of page clip image windows CPW are controlled so as not to overlap with each other.

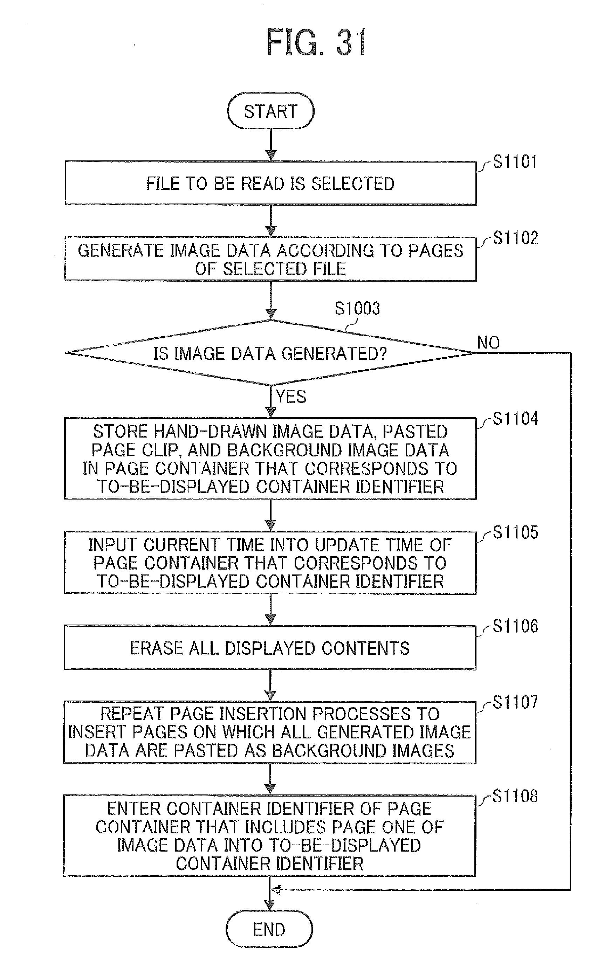

FIG. 31 is a flowchart of document reading processes according to an example embodiment of the present invention. The flow of the document reading processes starts, for example, when the icon "READ DOCUMENT" is touched in the example screen shown in FIG. 30. When the process starts, firstly, a dialog for selecting a document to be read is displayed.

When the operating system (OS) on which the system operates is Windows (registered trademark), a class library such as the open file dialog may be used to select a file to be read, and the actual data of the selected file can be reviewed (step S1101).

Next, the specified file is read, and the image data that corresponds to the pages of the file is generated (step S1102). When the OS on which the system operates is Windows (registered trademark) and the native application of the file to be read is compatible with the object linking and embedding (OLE) automation, the functions of the OLE automation may be used to extract the data of the selected file as image data on a page-by-page basis.

Next, page insertion processes are repeated to insert pages on which all the image data included in the selected file are pasted as background images (step S1107). Finally, the container identifier of the page container that corresponds to the page one of the image data, i.e., the first page of the read file, is entered into the to-be-displayed container identifier (step S1108), and the process terminates. As a result of the processes described above, a page whose background image is the first page of the read file is displayed.

Note that the embodiments described above are preferred example embodiments of the present invention, and various applications and modifications may be made without departing from the scope of the invention. Further, any of the above-described devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage media include, but are not limited to, flexible disk, hard disk, optical discs, magneto-optical discs, magnetic tapes, nonvolatile memory cards, ROM (read-only-memory), etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

## Claims

1. An electronic device (1) comprising:
a display (10) configured to display screen data;
an image data storage unit (131) configured to store a plurality of pages of image data in association with page information of the image data;
an image data extraction unit (125) configured to extract a part of the plurality of pages of image data;
an extraction image data storage unit (131) configured to store the extracted part of the plurality of pages of image data, in association with attribute information of the extracted part of the plurality of pages of image data and page information of the image data from which the part of the plurality of pages of image data has been extracted; and
an image data pasting unit (126) configured to paste the extracted part of the plurality of pages of image data obtained from the extraction image data storage unit (131) on the screen data displayed on the display (10).

2. The electronic device (1) according to claim 1, wherein the image data extraction unit (125) includes an extraction image data size changing unit configured to resize the extracted image data.

3. The electronic device (1) according to claim 1 or 2, wherein the image data pasting unit (126) includes a pasted-image data size changing unit configured to resize the part of the plurality of pages of image data pasted on the screen data displayed on the display (10).

4. The electronic device (1) according to any one of claims 1 to 3, wherein the image data pasting unit (126) includes a position information storage unit configured to store position information of the part of the plurality of pages of image data pasted on the screen data displayed on the display (10), in relation to the screen data displayed on the display (10).

5. The electronic device (1) according to any one of claims 1 to 4, wherein
the pasted part of the plurality of pages of image data includes a plurality of partial images, and
the image data pasting unit (126) pastes the plurality of partial images on the image data displayed on the display (10) in such a manner that the plurality of partial images do not overlap with each other.

6. The electronic device (1) according to any one of claims 1 to 5, further comprising
a drawing unit (121) configured to draw an additional image on the image data displayed on the display (10), wherein
the part of the plurality of pages of image data extracted by the image data extraction unit (125) is the additional image drawn by the drawing unit (121).

7. The electronic device (1) according to any one of claims 1 to 6, wherein the part of the plurality of pages of image data extracted by the image data extraction unit (125) is a document file stored in the image data storage unit (131).

8. A method for displaying image data, the method comprising:
displaying screen data on a display (10);
storing (S505) a plurality of pages of image data in a storage unit (131) in association with page information of the image data;
extracting (S807) a part of the plurality of pages of image data to store the extracted part of the plurality of pages of image data in the storage unit (131);
storing (S808) the extracted part of the plurality of pages of image data in the storage unit (131), in association with attribute information of the extracted part of the plurality of pages of image data and page information of the image data from which the part of the plurality of pages of image data has been extracted; and
pasting (S907, S908) the extracted part of the plurality of pages of image data obtained from the storage unit (131) on the screen data displayed on the display (10).

9. The method according to claim 8, wherein the extracting (S807) includes resizing (S806) the extracted image data.

10. The method according to claim 8 or 9, wherein the pasting (S907, S908) includes resizing (S1008) the part of the plurality of pages of image data pasted on the image data displayed on the display (10).

11. The method according to any one of claims 8 to 10, wherein the pasting (S907, S908) includes storing (S1010) position information of the part of the plurality of pages of image data pasted on the image data displayed on the display (10), in relation to the image data displayed on the display (10).

12. The method according to any one of claims 8 to 11, wherein
the pasted part of the plurality of pages of image data includes a plurality of partial images, and
the pasting (S907, S908) including pasting (S1009) the plurality of partial images on the image data displayed on the display (10) in such a manner that the plurality of partial images do not overlap with each other.

13. The method according to any one of claims 8 to 12, further comprising drawing (S32) an additional image on the image data displayed on the display (10).
